(19) Europäisches Patentamt / European Patent Office / Office européen des brevets

(11) **EP 2 136 195 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(51) Int Cl.:
*G01M 17/04* (2006.01)    *B60G 17/06* (2006.01)

(21) Anmeldenummer: **09161193.9**

(22) Anmeldetag: **27.05.2009**

(54) **Verfahren zum Prüfen eines Schwingungsdämpfers eines Kraftfahrzeugs im eingebauten Zustand sowie Schwingungsdämpfer-Prüfsystem für ein Kraftfahrzeug**

Method and device for testing an installed shock absorber of a motor vehicle

Procédé et dispositif d'essai d'un amortisseur de chocs intégré dans un véhicule automobile

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **17.06.2008 DE 102008002484**

(43) Veröffentlichungstag der Anmeldung:
**23.12.2009 Patentblatt 2009/52**

(73) Patentinhaber: **Beissbarth GmbH**
**80993 München (DE)**

(72) Erfinder:
• **Nobis, Guenter**
**72622, Nuertingen (DE)**
• **Wegener, Daniel**
**52064, Aachen (DE)**
• **Abraham, Steffen**
**31134, Hildesheim (DE)**

(74) Vertreter: **Schmitt-Nilson Schraud Waibel Wohlfrom**
**Patentanwälte Partnerschaft mbB**
**Pelkovenstraße 143**
**80992 München (DE)**

(56) Entgegenhaltungen:
**DE-A1- 3 826 196**    **US-A- 6 161 419**
**US-A1- 2006 149 494**

• **None**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Verfahren zum Prüfen eines Schwingungsdämpfers eines Kraftfahrzeugs im eingebauten Zustand sowie Schwingungsdämpfer-Prüfsystem für ein Kraftfahrzeug

Die Erfindung betrifft ein Verfahren zum Prüfen eines Schwingungsdämpfers eines Kraftfahrzeugs im eingebauten Zustand, sowie ein Schwingungsdämpfer-Prüfsystem für ein Kraftfahrzeug.

Gängige Schwingungsdämpfer umfassen eine Feder, sowie ein Dämpfungsglied, und sie dienen sowohl dazu, die Fahrsicherheit eines Kraftfahrzeugs zu gewährleisten, als auch dazu, den Fahrkomfort zu optimieren. Die Fahrsicherheit wird stark durch die Bodenhaftung der Reifen beeinflusst. Schwingungen der Radmassen werden daher durch starke Dämpfung häufig minimiert. Andererseits erfordert ein zufriedenstellender Fahrkomfort eine eher schwache Dämpfung. Bei der Auslegung von Schwingungsdämpfern ist daher ein Kompromiss zwischen harter Sicherheitsdämpfung und weicher Komfortdämpfung anzustreben.

Ein im Kraftfahrzeug eingebauter Schwingungsdämpfer verschleißt im Laufe des Fahrbetriebs und ändert sein Schwingungsverhalten sowie seine Dämpfercharakteristik, sodass nach einiger Zeit häufig ein sicherheitskritischer Zustand erreicht wird.

Zur Überprüfung der Leistungsfähigkeit von Schwingungsdämpfern können diese ausgebaut und auf einem separaten Prüfstand vermessen werden. Dieses Prüfverfahren liefert zwar genaue Prüfergebnisse, ist jedoch aufgrund des Demontageaufwands aus Zeit- und Kostengründen nicht praktikabel und wird daher kaum eingesetzt.

US 6 161 419 A offenbart ein Verfahren zur Bestimmung der Eigenschaften von einem Kraftfahrzeug eingebauten Stossdämpfer, bei dem das Kraftfahrzeug auf eine Auffahrhalterung gebracht wird, die anschließend sch entfernt wird,damit das Kraftfahrzeug auf eine Unterlage auffällt, deren Abstand von der Auffahrhalterung dem durch die Konstruktion des Kraftfahrzeuges vorgegebenen Restausfederungsweg entspricht und der Verlauf der beim Auftreffen auf die Unterlage wirkenden sogenannten Radaufstandskraft bestimmt wird. Dabei wird das Schwingungsverhalten der Karosserie und jeweils eines Rades mit dem Ziel gemessen, durch Kombination der Messergebnisse die für das Fahrwerk eines Kraftfahrzeugs charakteristischen Daten berechnen zu können.

Aus der EP 0 611 960 B1 und der DE 43 05 048 A1 ist ein Verfahren zum Prüfen eines Schwingungsdämpfers eines Kraftfahrzeugs bekannt, bei dem durch Fußpunkterregungsschwingungen Schwingungen über ein auf einer Radaufstandsfläche aufstehendes Kraftfahrzeugrad in die den zu prüfenden Schwingungsdämpfer enthaltende Radaufhängung des Kraftfahrzeugs eingeleitet werden und dabei das Dämpfungsverhalten bestimmt wird, indem die Differenzen aus den Bewegungsamplituden und den Bewegungsgeschwindigkeiten des Rads und denen des Fahrzeugaufbaus mit der Beschleunigung des Rads oder der dynamischen Aufstandskraft in Beziehung gesetzt werden und der Dämpfungskoeffizient aus dieser Beziehung geschätzt wird, in dem zur Qualitätsprüfung des Schwingungsdämpfers der geschätzte Dämpfungskoeffizient mit einem Referenzwert verglichen wird und für die Qualitätsprüfung festgestellt wird, ob eine Abweichung vom Referenzwert innerhalb eines Toleranzbereichs liegt.

Hierfür sind aufwändige Prüfstandsaktuatoriken notwendig, die das Kraftfahrzeug in Schwingung versetzen. Des Weiteren hat sich gezeigt, dass die Reproduzierbarkeit der Messungen nicht immer gewährleistet ist, und dass die Messwerte für den Schwingungsdämpfer die Dämpfercharakteristik nur unzufriedenstellend beschreiben.

Es ist daher Aufgabe der vorliegenden Erfindung, ein Verfahren sowie ein System zum Prüfen eines Schwingungsdämpfers eines Kraftfahrzeugs im eingebauten Zustand anzugeben, mit denen der eingebaute Schwingungsdämpfer zeit- und kostengünstig überprüft und bewertet werden können und mit denen schadhafte Schwingungsdämpfer zuverlässig identifiziert werden können.

Diese Aufgabe wird durch den Gegenstand des unabhängigen Patentanspruchs 1 gelöst, vorteilhafte Weiterbildungen ergeben sich aus den abhängigen Ansprüchen.

Das erfindungsgemäße Verfahren zum Prüfen eines Schwingungsdämpfers eines Kraftfahrzeugs im eingebauten Zustand geht für die Modell-gestützte Auswertung von einer Betrachtung der Fahrzeugschwingung bei einer beliebigen Unebenheitsanregung als Einmassenschwinger aus.

Mittels des erfindungsgemäßen Verfahrens zum Prüfen einer Feder sowie einem Dämpfungsglied enthaltenden Schwingungsdämpfers kann der Zustand des eingebauten Schwingungsdämpfers getrennt bewertet werden, und die relevanten Parameter Dämpfungskonstante, Federsteifigkeit, Aufbaumasse und Dämpfungsmaß können hinreichend genau bestimmt werden. Schadhafte Dämpfer können somit zuverlässig identifiziert werden.

Erfindungsgemäß erfolgt die Erfassung der Bewegung von Rad und Karosserie mittels optischer Messtechnik, und das Kraftfahrzeug braucht nur mittels einer definierten, insbesondere einmaligen Anregung in eine vertikale Schwingung versetzt werden.

Das erfindungsgemäße Verfahren mit der optischen Erfassung der Position des Rads und der Karosserie zu mehreren Erfassungszeitpunkten während der Schwingung ist grundsätzlich für eine beliebige Schwingungsanregung geeignet. Die Anregung kann mit möglichst geringem Aufwand durch die Überfahrt einer oder mehrerer Bodenschwellen bzw. Schwellen oder auf konventionellen Schwingungsdämpfer-Plattenprüfständen, bspw. durch vertikales Bewegen der Radauflage, auf welcher das Kraftfahrzeug steht, um eine bestimmte Strecke, erfolgen.

Falls das Versetzen des Fahrzeugs in eine vertikale Schwingung durch Überfahren einer Schwelle erfolgt, kann die Rad- und Karosseriebewegung während der Fahrt über diese Schwelle gemessen werden. Der Begriff Schwelle wird dabei erfindungsgemäß als Oberbegriff für alle Anregungseinrichtungen erfolgt, die von einem Kraftfahrzeug überfahren werden und das Rad dabei temporär vertikal versetzen. Beliebige Hindernisse, bspw. Stufen und dergleichen, sind dabei erfindungsgemäß als Schwelle zu verstehen. Durch die Verwendung einer Schwelle zur Schwingungsanregung entfällt somit erfindungsgemäß eine aufwändige Prüfstandsaktuatorik, um das Kraftfahrzeug in Schwingung zu versetzen, und die notwendige Bewegungsenergie wird hierbei von dem Kraftfahrzeug selbst generiert.

Erfindungsgemäß erfolgt die Bewertung des Schwingungsdämpfers anhand einer Modell-basierten Auswertung der gemessenen Rad- und Karosseriebewegung unter Verwendung von Differenzialgleichungen zur Bestimmung der Parameter für die Dämpfungskonstante bzw. Aufbaudämpfungskonstante, für die Federsteifigkeit bzw. Aufbaufedersteifigkeit und für die Aufbaumasse, und aus diesen Parametern kann das Dämpfungsmaß berechnet werden. Das Dämpfungsmaß, das auch als Dämpfungsgrad oder Lehr'sche Dämpfung bezeichnet wird, setzt die Größe der Achsdämpfung in Zusammenhang zu der Aufbaumasse und der Federsteifigkeit. Das Dämpfungsmaß ist eine dimensionslose Größe und ermöglicht die Beurteilung der in einem Schwingungssystem enthaltenen Dämpfung unter Berücksichtigung der relevanten Schwingungsparameter. Das Dämpfungsmaß ist geeignet, Schwingungsdämpfer verschiedener Fahrzeuge objektiv miteinander zu vergleichen und auf Einhaltung von Grenzwerten für die Fahrsicherheit zu überprüfen.

Im Unterschied zu bisherigen Prüfverfahren spielt bei der erfindungsgemäßen Schwingungsdämpferprüfung die Messgröße Radaufstandskraft keine Rolle, und dadurch kann eine Vereinfachung der Prüfanordnung und ein Wegfall von aufwändigen Prüfstandsaktuatoriken und Sensoren zur Messung von Radaufstandskräften erreicht werden.

Des Weiteren wird erfindungsgemäß die Relativbewegung zwischen Kraftfahrzeugrad und Karosserie betrachtet, wodurch der störende Einfluss des Reifens auf das Prüfergebnis eliminiert wird. Damit werden eine Vereinfachung des Schwingungsmodells, bei dem ein sogenannter Einmassenschwinger anstelle eines Zweimassenschwingers betrachtet wird, und zugleich eine deutliche Verbesserung der Bewertung des Zustands der Schwingungsdämpfer erreicht.

Erfindungsgemäß werden aus den gemessenen Bilddaten anschließend die Bewegungen von Karosserie bzw. Fahrzeugaufbau und dem Kraftfahrzeugrad basierend auf mehreren Erfassungszeitpunkten ermittelt. Diese Bewegungsgrößen dienen in ihrer Zeit- und Wegabhängigkeit als Grundlage für die Bewertung der Schwingungsdämpfer.

Mit dem erfindungsgemäßen Verfahren lässt sich auf einfache Weise der Zustand der Schwingungsdämpfer im eingebauten Zustand bewerten. Eine getrennte Bewertung der vier Schwingungsdämpfer ist möglich, sodass Unterschiede direkt erkannt werden. Aufgrund des einfachen Messverfahrens und der schnellen Abarbeitung des Auswertealgorithmus in der Rechnereinheit des Messsystems liegen die Ergebnisse direkt nach der Durchführung der Messung vor, was einen großen Vorteil im Vergleich zu den bestehenden Prüfansätzen darstellt.

Die Erfindung betrifft auch ein Verfahren zum Prüfen der Schwingungsdämpfer wenigstens einer Achse eines Kraftfahrzeugs im eingebauten Zustand, bei dem das Verfahren zum Prüfen eines Schwingungsdämpfers eines Kraftfahrzeugs im eingebauten Zustand gemäß der beschriebenen Art nacheinander für die Räder der betreffenden Achse durchgeführt wird, um die Dämpfungsmaße oder die Dämpfung der Achse zu bestimmen, und bei dem die Hub-, Nick- und Wankbewegungen der Aufbaumaße berücksichtigt werden. Dadurch lässt sich das erfindungsgemäße Verfahren zum Prüfen eines Schwingungsdämpfers eines Kraftfahrzeugs im eingebauten Zustand auch auf ein Einspurmodell oder ein Vierrad-Fahrzeugmodell erweitern.

Die Erfindung betrifft des Weiteren ein Schwingungsdämpfer-Prüfsystem für ein Kraftfahrzeug mit wenigstens einem Messkopf zum optischen Erfassen der Position eines Rads und der Karosserie des Kraftfahrzeugs zu mehreren Erfassungszeitpunkten, eine Anregungseinrichtung zum Versetzen des Kraftfahrzeugs in eine vertikale Schwingung, insbesondere eine Schwelle zum Überfahren durch das Kraftfahrzeug sowie eine Datenverarbeitungseinheit. Diese ist mit dem Messkopf verbunden und eingerichtet, um Messdaten von dem betreffenden Messkopf zu empfangen und um ein Verfahren zum Prüfen eines Schwingungsdämpfers eines Kraftfahrzeugs im eingebauten Zustand der oben beschriebenen Art durchzuführen.

Die Erfindung ist nachfolgend anhand von Ausführungsbeispielen mit Bezug auf die beiliegenden Figuren näher erläutert.

Figur 1 zeigt ein erfindungsgemäßes Messsystem und ein Versuchsfahrzeug, dessen Schwingungsdämpfer erfindungsgemäß überprüft werden sollen;

Figur 2 zeigt eine Prinzipskizze eines Schwingungsmodells;

Figur 3 zeigt ein Ablaufdiagramm eines erfindungsgemäßen Verfahrens zum Prüfen eines Schwingungsdämpfers des Versuchsfahrzeugs aus Figur 1;

Figur 4 zeigt eine schematische Darstellung eines Vierrad-Fahrzeugmodells; und

Figur 5 zeigt ein erstes, ein zweites und ein drittes Schwingungsverlaufsdiagramm.

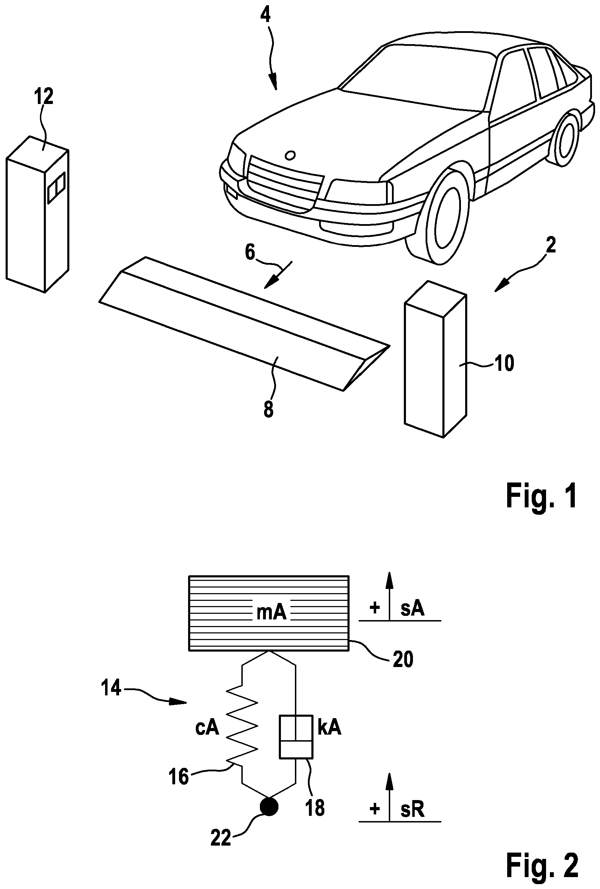

Figur 1 zeigt eine schematische Darstellung eines erfindungsgemäßen Messsystems 2 mit einem Versuchsfahrzeug 4, dessen Schwingungsdämpfer erfindungsgemäß überprüft werden sollen.

Das Messsystem 2 umfasst eine längliche Schwelle von definierter Höhe, deren Haupterstreckungsrichtung im Wesentlichen rechtwinklig zu der Bewegungsrichtung 6 des Versuchsfahrzeugs 4 angeordnet ist. Die Breite der Schwelle 8 entspricht wenigstens der Breite des Versuchsfahrzeugs 4, sodass beim Überfahren der Schwelle 8 in Bewegungsrichtung 6 durch das Versuchsfahrzeug 4 jeweils beide Räder der gleichen Achse durch die Schwelle 8 eine definierte Anregung erfahren und dadurch in eine vertikale Schwingung versetzt werden.

Seitlich neben der Schwelle 8, entweder auf Höhe der Schwelle 8 oder kurz danach, sind ein linker Messkopf 10 und ein rechter Messkopf 12 angeordnet, die jeweils nach innen gerichtete Messkameras, bspw. CCD-Sensoren, umfassen, die in in geeigneter Höhe angebracht und in der Lage sind, die Position des Rads und der Karosserie des Kraftfahrzeugs, insbesondere bestimmter Merkmale auf dem Rad, bspw. das Felgenhorn oder bestimmte Bohrungen, und auf der Karosserie, bspw. den Rand des Kotflügels, optisch zu erfassen.

Figur 2 zeigt eine Prinzipskizze eines Schwingungsmodells 14.

Das Schwingungsmodell 14 ist ein Weg-angeregtes Einmassenschwingsystem (EMS), mit dem sich die Schwingung zwischen dem Fahrzeugaufbau und dem Kraftfahrzeugrad beschreiben lässt. Das Schwingungsmodell 14 stellt die Betrachtung eines Viertelfahrzeugs dar, d. h., eine Achsseite mit der anteiligen Aufbaumasse mA.

Die Kraftfahrzeugmasse bzw. Aufbaumasse mA ist mit dem Bezugszeichen 20 gekennzeichnet und schematisch als Rechteck dargestellt. Die Radachse 22 bzw. die Radaufhängung ist mit dem Bezugszeichen 22 gekennzeichnet. Der Schwingungsdämpfer wird von der Feder 16 mit der Federsteifigkeit cA und dem parallelen Dämpfungsglied 18 mit dem Dämpfungsfaktor kA gebildet, und die Aufbaumasse 20 ist durch diesen Schwingungsdämpfer auf der Radachse 22 gelagert.

Die Richtung der Bewegung des Kraftfahrzeugrads bzw. der Radbewegung sR ist mit einem nach oben gerichteten Pfeil dargestellt, und die Richtung der Bewegung des Kraftfahrzeugaufbaus bzw. der Aufbaubewegung sA ist ebenfalls mit einem nach oben gerichteten Pfeil dargestellt.

Das Messsystem 2 verfügt des Weiteren noch über eine Datenverarbeitungseinheit, die die Messwerte von den Messkameras der Messköpfe 10 und 12 erhält und die eingerichtet ist, um das erfindungsgemäße Verfahren durchzuführen.

Das Messsystem 2 kann über die Möglichkeit einer Dateneingabe verfügen, mittels derer Daten für das zu prüfende Fahrzeug entweder manuell über eine angeschlossene Tastatur oder über eine Datenkopplung zu einem anderen Computer oder durch Einlesen von einem Speichermedium eingegeben werden können.

Die Aufbaumasse 20 wird aufgrund der Bewegung des Kraftfahrzeugrads und die Übertragung durch den Schwingungsdämpfer zum Schwingen angeregt.

Die Schwingung des in Figur 2 dargestellten Weg angeregten Einmassenschwingers kann durch die folgende Differenzialgleichung beschrieben werden:

$$mA \cdot \ddot{s}A + kA \cdot \left( \dot{s}A - \dot{s}R \right) + cA \cdot \left( sA - sR \right) = 0$$

Diese Differenzialgleichung ist eine homogene Gleichung, die Größen mA, kA und cA können jeweils mit einem gemeinsamen Faktor multipliziert werden, ohne dass sich die Lösung der Differenzialgleichung ändert.

Während der Bestimmung der Parameter muss eine der drei Größen mA, kA und cA bekannt sein und kann in der Optimierung nicht bestimmt werden. Eine gemeinsame Bestimmung aller drei Parameter ist nicht möglich.

In der Praxis wird die Fahrzeugmasse mA als bekannt angenommen und es werden nur der Dämpfungsfaktor kA und die Federsteifigkeit cA in der Optimierung bestimmt.

Wird diese Differenzialgleichung durch die Aufbaumasse mA geteilt, so ergibt sich folgende Formulierung der Differenzialgleichung:

$$\ddot{s}A + 2 \cdot \delta \cdot \left( \dot{s}A - \dot{s}R \right) + \omega_0^2 \cdot \left( sA - sR \right) = 0$$

Dabei stellen $\delta$ die Abklingkonstante $\delta = \dfrac{kA}{2 \cdot mA}$ und $\omega_0$ die Eigenkreisfrequenz $\omega_0 = \sqrt{\dfrac{cA}{mA}}$ mit

$$\omega = 2\pi \cdot f = \frac{2\pi}{T} \quad \text{und} \quad f_0 = \frac{1}{2\pi}\sqrt{\frac{cA}{mA}} \quad \text{die Eigenfrequenz dar.}$$

Die Eigenkreisfrequenz ist somit durch die Federsteifigkeit cA und durch die Aufbaumasse mA definiert, und sie wird nicht durch die Dämpfung beeinflusst. Üblicherweise liegt die Eigenkreisfrequenz knapp unter 2 Hz.

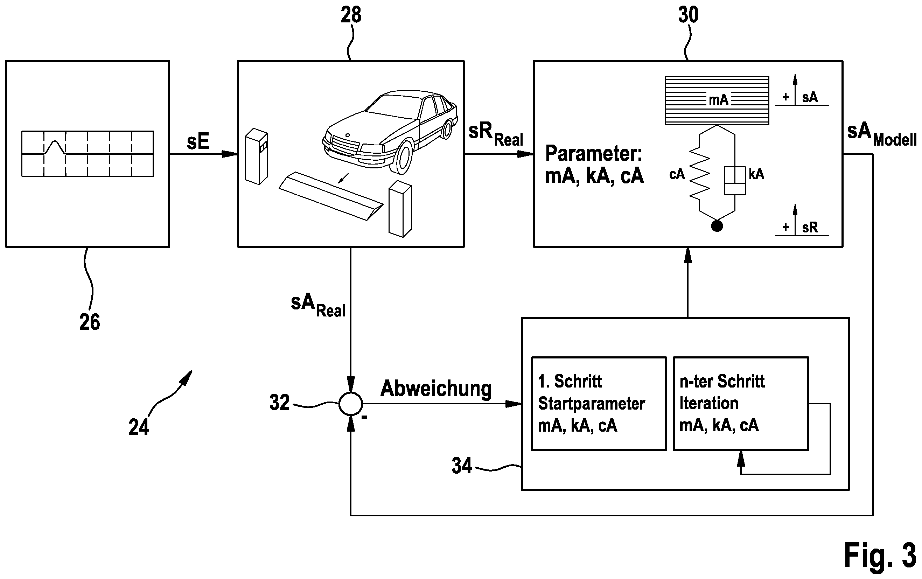

Figur 3 zeigt ein Ablaufdiagramm 24 eines ersten erfindungsgemäßen Verfahrens zum Prüfen eines Schwingungsdämpfers des Versuchsfahrzeugs 4.

Zu Beginn des Verfahrens werden Startwerte der Dämpfungskonstanten kA, der Federsteifigkeit cA und der Aufbaumasse mA für das zu betrachtende Rad des Kraftfahrzeugs bestimmt. Zusätzlich können für diese Parameter noch Grenzwerte definiert werden. Solche Start- und Grenzwerte können im einfachsten Fall aus Erfahrungswerten abgeleitet werden, zur Verbesserung aus verfügbaren Fahrzeugdaten abgeschätzt werden oder mit vorangegangenen Messungen, wie bspw. der Fahrzeugmasse oder der Radlast, genauer bestimmt werden.

Im ersten Verfahrensschritt erfolgt eine Schwingungsanregung 26 durch Überfahren der Schwelle 8 mit dem jeweiligen Rad des Versuchsfahrzeugs 4. Durch die definierte Anregung sE wird das Versuchsfahrzeug 4 in vertikale Schwingung versetzt, die von dem Dämpfungsglied 18 des jeweiligen Kraftfahrzeugrads gedämpft wird.

Im zweiten Verfahrensschritt erfolgt die Messung 28 durch die Messköpfe 10 und 12. Dabei werden das zu betrachtende Rad und die benachbarte Karosserie des Versuchsfahrzeugs 4 durch die Kameras des jeweils direkt gegenüberliegenden Messkopfs 10 und 12 betrachtet, und die Positionen des Rads und der Karosserie werden während der Schwingung optisch erfasst.

Im nächsten Verfahrensschritt wird durch das Simulationsmodell 30 der theoretische Aufbauschwingweg $sA_{Modell}$ berechnet, wobei die definierte Anregung $sR_{real}$, die Fahrzeugmasse für das betreffende Kraftfahrzeugrad mA, die Dämpfungskonstante kA und die Federsteifigkeit cA als Parameter verwendet werden.

Die Fahrzeugbewegung ($sR_{real}$, $sA_{real}$) wird mittels dem zu betrachtenden Kraftfahrzeugrad gegenüberliegenden Messkopf 10 oder 12 gemessen.

Als Ergebnis des Simulationsmodells 30 ergibt sich der berechnete Aufbauschwingweg $sA_{Modell}$ als Modellausgangsgröße. Parallel dazu wird der tatsächliche Aufbauschwingweg $sA_{real}$ beobachtet und zu den verschiedenen Erfassungszeitpunkten mit dem berechneten Aufbauschwingweg $sA_{Modell}$ verglichen. Insbesondere wird im Verfahrensschritt 32 eine Differenz zwischen dem beobachteten Aufbauschwingweg $sA_{real}$ und dem berechneten Aufbauschwingweg $sA_{Modell}$ berechnet, und aus einer derartigen Abweichung wird ein Kennwert berechnet.

Insbesondere kann diese Abweichung anhand einer Fehlerfunktion beschrieben werden, bspw. durch die wie folgt definierte Fehlerfunktion, welche die Summe der Fehlerquadrate zwischen Modell und Messungen bildet:

$$\Delta = \sum_{i=1}^{n} \left( sA_{real,i} - sA_{Modell,i} \right)^2$$

Diese nicht lineare Fehlerfunktion mit mehreren Variablen kann durch Verwendung von dem Fachmann bekannten mathematischen Verfahren minimiert werden. Als Ergebnis erhält man Messwerte für die Dämpfungskonstante kA, für die Federsteifigkeit cA und für die Aufbaumasse mA, und daraus lässt sich das Dämpfungsmaß des Schwingungsdämpfers nach der folgenden Formel bestimmen:

$$\vartheta = \frac{\delta}{\omega_0} = \frac{kA}{2\sqrt{cA \cdot mA}}$$

Im Verfahrensschritt der Modellparametrisierung 34 werden demnach diejenigen Parameter für die Dämpfungskonstante kA, die Federsteifigkeit cA und die Aufbaumasse mA berechnet, die eine optimale Überdeckung zwischen realer und Modell-basierter Aufbaubewegung darstellen.

Die Verfahrensschritte 26, 28, 30, 32 und 34 des Ablaufdiagramms 24 können wiederholt werden, wobei jeweils die in der Modellparametrisierung 34 bestimmten Werte für die Dämpfungskonstante kA, die Federsteifigkeit cA und die Aufbaumasse mA als Startwerte verwendet werden.

Bei dem in Figur 3 dargestellten erfindungsgemäßen Verfahren zum Prüfen eines Schwingungsdämpfers eines Kraftfahrzeugs im eingebauten Zustand wird demnach ein Schwingungsmodell aufgebaut, bei dem die Parameter für die Aufbaumasse mA, die Dämpfungskonstante kA und die Federsteifigkeit cA variabel gehalten werden, bei dem die Parametrierung des Schwingungsmodells in einem iterativen Prozess erfolgt und bei dem sich mittels der bestimmten Parameter das Dämpfungsmaß für das Schwingungssystem berechnen lässt. Es werden also diejenigen Parameter gesucht, die den Schwingungsverlauf bestmöglich nachbilden.

Gemäß einem alternativen, nicht in Figur 3 dargestellten Verfahren, das nicht Gegenstand der beanspruchten Erfindung ist, wird zunächst das Kraftfahrzeug in eine vertikale Schwingung mittels einer definierten Anregung $sR_{real}$ versetzt, bspw. durch Überfahren der Schwelle 8 mit dem Versuchsfahrzeug 4, dann werden die Positionen des Rads und der Karosserie des Versuchsfahrzeugs 4 zu mehreren Erfassungszeitpunkten während der Schwingung optisch erfasst. Danach wird ein die Schwingung des Schwingungsdämpfers beschreibendes Differenzialgleichungssystem zu den Erfassungszeitpunkten aufgestellt. Daraus können mittels mathematischer Verfahren, die dem Fachmann bekannt sind und hier nicht näher erläutert zu werden brauchen, die unbekannten Größen Abklingkonstante und Eigenkreisfrequenz ermittelt, und schließlich lässt sich daraus das Aufbaudämpfungsmaß des Schwingungsdämpfers bestimmen.

Insbesondere können die unbekannten Größen Abklingkonstante und Eigenkreisfrequenz anhand eines dem Fachmann bekannten und hier nicht näher zu erläuternden Parameterschätzverfahrens ermittelt werden. Mittels dieses Parameterschätzverfahrens wird die optimale Lösung für die Parameter Abklingkonstante und Eigenkreisfrequenz bestimmt, sodass das Differenzialgleichungssystem für jeden Messwert der Rad- und Aufbaubewegung erfüllt ist, wie es in der folgenden Gleichung dargestellt ist.

$$\sum_{i=1}^{n}\left[\ddot{s}A_i + 2\cdot\delta\cdot\left(\dot{s}A_i - \dot{s}R_i\right) + \omega_0^2\cdot\left(sA_i - sR_i\right)\right]^2 \to 0$$

Das Dämpfungsmaß kann basierend auf der Abklingkonstante und der Eigenkreisfrequenz nach der oben genannten Formel bestimmt werden.

Das erfindungsgemäße Verfahren zum Prüfen eines Schwingungsdämpfers eines Kraftfahrzeugs im eingebauten Zustand lässt sich auch auf ein Einspurmodell, bei dem die Räder der Vorder- und Hinterradachse gleichzeitig betrachtet werden, oder auf ein Vierrad-Fahrzeugmodell erweitern.

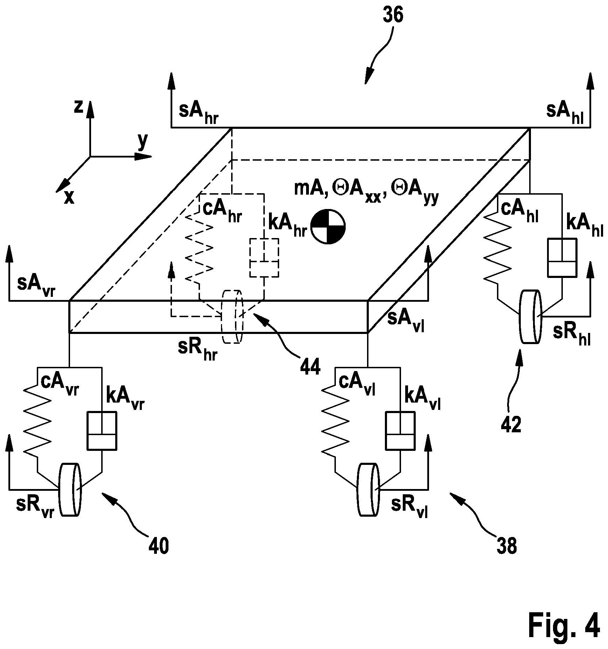

Figur 4 zeigt eine schematische Darstellung eines Vierrad-Fahrzeugmodells 36.

Das Vierrad-Fahrzeugmodell 36 setzt sich aus einem Schwingungsmodell 38 für den vorderen linken Schwingungsdämpfer, aus einem Schwingungsmodell 40 für den vorderen rechten Schwingungsdämpfer, aus einem Schwingungsmodell 42 für den hinteren linken Schwingungsdämpfer und aus einem Schwingungsmodell 44 für den hinteren rechten Schwingungsdämpfer zusammen, wobei die Fahrzeugaufbaumasse nicht mehr als Punktmasse, sondern als massebehaftete Scheibe betrachtet wird, wie dies in Figur 4 schematisch dargestellt ist. Dadurch entstehen für die Betrachtung der vertikalen Bewegung zwei zusätzliche Freiheitsgrade θAxx und θAyy.

Das Vierrad-Fahrzeugmodell führt zu mehreren Differentialgleichungen. Diese beinhalten die Radbewegungen für alle vier Räder. Für den Aufbau gibt es dann insgesamt eine Hubbewegung sowie eine Nick- und Wankschwingung. Die Hubbewegung ist mit der Fahrzeugmasse verknüpft. Die Nick- und Wankschwingung ist mit den Trägheitsmomenten TAxx und TAyy verknüpft. Die Nick- und Wankschwingungen des Aufbaus können über die Bildverarbeitung gemessen werden.

Bei der Parameteroptimierung werden dann die Parameter für alle vier Räder gemeinsam optimiert, so dass die simulierte Bewegung möglichst gut der real gemessenen Bewegung entspricht. Somit gilt:

$$\sum\left(sA_{realVL} - sA_{ModellVL}\right)^2 + \left(sA_{realVR} - sA_{ModellVR}\right)^2 + \left(sA_{realHL} - sA_{ModellHL}\right)^2 +$$

$$\left(sA_{realHR} - sA_{ModellHR}\right)^2 \to \min.$$

Dabei sind VL, VR, HL und HR die entsprechenden Messungen des Fahrzeugaufbaus an den Positionen Vorne Links, Vorne Rechts, Hinten Links und Hinten Rechts.

In der Veröffentlichung der RWTH Aachen: Institut für Kraftfahrwesen, Wallentowitz, Henning: Vertikal-/Querdynamik von Kraftfahrzeugen, 7. Auflage 2005, ISNB 3-925194-35-5 ist das Einspurmodell und das Vierrad-Fahrzeugmodell im Einzelnen erläutert, und dies ist dem Fachmann bekannt.

Das Vorgehen zur Parameterbestimmung entspricht dem Ablaufdiagramm 24 gemäß Figur 3 , wobei der Block mit dem Simulationsmodell 30 dann das Vierrad-Fahrzeugmodell gemäß Figur 4 beinhaltet.

Gemäß dem Vierrad-Fahrzeugmodell 36 werden die vier Schwingungsdämpfer des Versuchsfahrzeugs 4 im eingebauten Zustand überprüft, indem für jeden Schwingungsdämpfer nach dem erfindungsgemäßen Verfahren der oben beschriebenen Art die Dämpfungsmaße für alle Räder gemeinsam bestimmt werden, und wobei die Hub-, Nick- und Wankbewegungen der Aufbaumasse berücksichtigt werden.

Somit lässt sich das Nick- bzw. das Nick- und Wankverhalten des Fahrzeugs beurteilen. Anhand einer Parameteridentifikation kann dann sowohl das Dämpfungsmaß auf der linken und rechten Achsseite miteinander verglichen werden, als auch die Werte der Vorderachse mit denen der Hinterachse. Die Differenzialgleichung des Systems mit den Trägheitsparametern mA, TAxx und TAyy beschreiben eine Hub-, Nick- und Wankbewegung der Aufbaumasse.

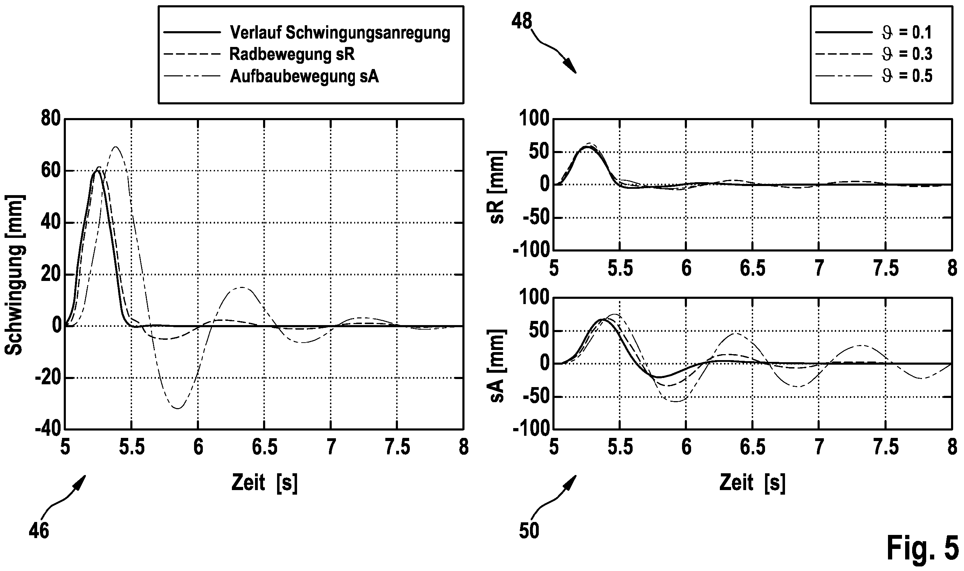

Figur 5 zeigt ein erstes Schwingungsverlaufsdiagramm 46, ein zweites Schwingungsverlaufsdiagramm 48 und ein drittes Schwingungsverlaufsdiagramm 50.

Im ersten Schwingungsverlaufsdiagramm 46 sind für ein Dämpfungsmaß von $\vartheta$ = 0,3 drei Kurven im Zeitverlauf dargestellt, nämlich als durchgezogene Linie der Verlauf der Schwingungsanregung, als gleichmäßig unterbrochene Linie der Verlauf der Radbewegung sR und als weitere gestrichelte Linie der Verlauf der Aufbaubewegung sA. Dabei ist zu erkennen, dass im Zeitintervall zwischen Sekunde 5 und 5,5 die Schwingungsanregung bspw. durch Überfahrt der Schwelle 8 erfolgt, und dass die Aufbaubewegung sA der Radbewegung sR leicht hinterher hinkt und deutlich höhere Amplitudenwerte als diese aufweist. Zum Zeitpunkt t = 8 s ist die Schwingung beendet.

In dem zweiten Schwingungsverlaufsdiagramm 48 ist der Verlauf der Radbewegung sR für drei verschiedene Dämpfungskoeffizienten dargestellt, und korrespondierend hierzu ist im dritten Schwingungsverlaufsdiagramm 50 der Verlauf der Aufbaubewegung sA für diese drei Dämpfungskoeffizienten visualisiert. Nach der definierten Anregung zwischen Sekunde 5 und 5,5 ist nur eine Schwingung mit geringer Amplitude zu beobachten, wobei bei der Aufbaubewegung sA eine Schwingung mit deutlich höherer Amplitude zu beobachten ist, die der Schwingung der Radbewegung sR leicht hinterher hinkt.

Bei geringerem Dämpfungskoeffizienten ergibt sich jeweils eine größere Amplitude. Bei der Schwellenüberfahrt muss die Fahrzeuglängsgeschwindigkeit angepasst werden, damit die Fahrzeugreaktion optimal ist. Abhängig von der Schwellenlänge, der Schwellenform, der Fahrgeschwindigkeit und der Aufbaueigenfrequenz variiert die Fahrzeugbewegung.

Eine maximale Fahrzeugreaktion wird bei einer Anregungsfrequenz f im Bereich der Aufbaueigenfrequenz $f_0$ erreicht. Mit sinkender Anregungsfrequenz nimmt die Amplitudenüberhöhung, nämlich das Verhältnis $sA_{max}/sR_{max}$ schnell ab. Oberhalb der Eigenfrequenz liegt sie bis zu einem Frequenzverhältnis $f/f_0=3$ oberhalb von 1. Um eine maximale Auflösung des Messsystems 2 und eine größtmögliche Fahrzeugreaktion zu erreichen, soll die Fahrzeugbewegung möglichst groß sein. Üblicherweise liegt die Aufbaueigenfrequenz eines Fahrzeugs bei 1 Hz bis 1,5 Hz. Eine Anregungsfrequenz f zwischen 1 Hz und 3 Hz ist vorteilhaft. Der Zusammenhang zwischen Anregungsfrequenz f, Fahrgeschwindigkeit v und Wellenlänge I ergibt sich durch die folgende Gleichung:

$$f = \frac{v}{l} \Rightarrow l = \frac{v}{f}$$

Die Fahrgeschwindigkeit v liegt im Schrittgeschwindigkeitsbereich bei 1 bis 2 m/s. Die Schwellenlänge in Fahrtrichtung sollte für diese Geschwindigkeit etwa 250 mm betragen.

**Patentansprüche**

1. Verfahren zum Prüfen eines Schwingungsdämpfers eines Kraftfahrzeugs (4) im eingebauten Zustand, umfassend Setzen von Startwerten der Dämpfungskonstante kA, der Federsteifigkeit cA für ein Rad eines Kraftfahrzeugs (4) und der Kraftfahrzeugmasse mA;
Versetzen des Kraftfahrzeugs (4) in eine vertikale Schwingung mittels einer definierten Anregung eines Rades an der Achse des Kraftfahrzeugs (4);
Optisches Erfassen der Positionen des Rades $sR_{real}$ und der Karosserie des Kraftfahrzeugs (4) zu mehreren Erfassungszeitpunkten während der Schwingung;
Bestimmen des theoretischen Aufbauschwingwegs $sA_{Modell}$ durch ein Simulationsmodell, welches auf der Differenzialgleichung

$$mA \cdot \ddot{s}A_{Modell} + kA \cdot \left( \dot{s}A_{Modell} - \dot{s}R_{real} \right) + cA \cdot \left( sA_{Modell} - sR_{real} \right) = 0$$

basiert, wobei die Position des einen Rades $sR_{real}$, die Kraftfahrzeugmasse mA für das betreffende Rad des Kraftfahrzeugs (4), die Dämpfungskonstante kA und die Federsteifigkeit cA als Parameter verwendet werden;
Minimieren der aus den Abweichungen zwischen dem theoretischen Aufbauschwingweg $sA_{Modell}$ und dem beobachteten Aufbauschwingweg $sA_{real}$ an den Erfassungszeitpunkten gebildeten Fehlerfunktion

$$\Delta = \sum_{i=1}^{n} \left( sA_{real,i} - sA_{Modell,i} \right)^2$$

und Bestimmen der Dämpfungskonstanten kA, der Federsteifigkeit cA und der Aufbaumasse mA daraus; und Bestimmen des Dämpfungsmaßes

$$\vartheta = \frac{kA}{2\sqrt{cA \cdot mA}}$$

des Schwingungsdämpfers.

2. Verfahren nach Anspruch 1, wobei die Verfahrensschritte mit den bestimmten Werten für die Dämpfungskonstante kA, die Federsteifigkeit cA und die Aufbaumasse mA als Startwerte wiederholt werden.

3. Verfahren nach einem der vorgehenden Ansprüche, wobei das Versetzen des Kraftfahrzeugs (4) in eine vertikale Schwingung mittels einer definierten Anregung durch Überfahren einer Schwelle erfolgt.

4. Verfahren nach einem der vorgehenden Ansprüche, wobei das Versetzen des Kraftfahrzeugs (4) in eine vertikale Schwingung mittels einer definierten Anregung $sR_{real}$ mit einer Anregungsfrequenz erfolgt, die zwischen 1 Hz und

$$f_0 = \frac{1}{2\pi}\sqrt{\frac{cA}{mA}}$$

3 Hz und insbesondere im Bereich der Aufbaueigenfrequenz liegt.

5. Verfahren zum Prüfen der Schwingungsdämpfer wenigstens einer Achse eines Kraftfahrzeugs (4) im eingebauten Zustand,
bei dem das Verfahren zum Prüfen eines Schwingungsdämpfers eines Kraftfahrzeugs (4) im eingebauten Zustand nach einem der vorgehenden Ansprüche für die Räder der betreffenden Achse durchgeführt wird, um die Dämpfungsmaße ϑ für die Räder der betreffenden Achse oder die Dämpfung der Achse zu bestimmen, und
bei dem die Hub-, Nick- und Wankbewegungen der Aufbaumasse berücksichtigt werden.

6. Schwingungsdämpfer-Prüfsystem (2) für ein Kraftfahrzeug (4), umfassend
wenigstens einen Messkopf (10, 12) zum optischen Erfassen der Positionen eines Rades und der Karosserie des Kraftfahrzeugs (4) zu mehreren Erfassungszeitpunkten;
eine Anregungseinrichtung zum Versetzen des Kraftfahrzeugs in eine vertikale Schwingung, insbesondere eine Schwelle (8) zum Überfahren durch das Kraftfahrzeug (4); und
eine Datenverarbeitungseinheit, die eingerichtet ist, um Messdaten von dem Messkopf (10, 12) zu empfangen und um ein Verfahren nach einem der vorhergehenden Ansprüche durchzuführen.

**Claims**

1. A method for testing a vibration damper of a motor vehicle (4) in the installed state, comprising the following steps:

setting start values of a damping constant kA, a spring rate cA for a wheel of a motor vehicle (4), and a motor vehicle body mass mA;
inducing a vertical vibration of the motor vehicle (4) by means of a defined excitation of one wheel on an axle of the motor vehicle (4);
optically detecting the positions of the wheel $sR_{real}$ and the body shell of the motor vehicle (4) at a plurality of detection instants during the vibration;
determining a theoretical body vibration excursion $sA_{Modell}$ by a simulation model based on the differential equation

$$mA \cdot \ddot{s}A_{Modell} + kA \cdot \left(\dot{s}A_{Modell} - \dot{s}R_{real}\right) + cA \cdot \left(sA_{Modell} - sR_{real}\right) = 0$$

using as parameters the position of said one wheel $sR_{real}$, the body mass mA for the respective wheel of the motor vehicle (4), the damping constant kA and the spring rate cA;
minimizing the error function

$$\Delta = \sum_{i=1}^{n} \left( sA_{real,i} - sA_{Modell,i} \right)^2$$

obtained from the deviations between the theoretical body vibration excursion $sA_{Modell}$ and the observed body vibration excursion $sA_{real}$ at said detection instants, and determining the damping constant kA, the spring rate cA and the body mass mA therefrom; and
determining the damping measure

$$\vartheta = \frac{kA}{2\sqrt{cA \cdot mA}}$$

of the vibration damper.

2.  The method according to claim 1, wherein the method steps are repeated with the determined values for the damping constant kA, the spring rate cA, and the body mass mA being used as start values.

3.  The method according to any of the preceding claims,
    wherein said inducing of a vertical vibration of the motor vehicle (4) is achieved by means of a defined excitation by driving across a threshold.

4.  The method according to any of the preceding claims,
    wherein said inducing of a vertical vibration of the motor vehicle (4) is achieved by means of a defined excitation $sR_{real}$ using an excitation frequency that is between 1 Hz and 3 Hz and in particular within the range of the body's natural frequency $f_0 = \frac{1}{2\pi}\sqrt{\frac{cA}{mA}}$ .

5.  A method for testing the vibration dampers of at least one axle of a motor vehicle (4) in the installed state,
    wherein the method for testing a vibration damper of a motor vehicle (4) in the installed state according to any of the preceding claims is performed for the wheels of the respective axle in order to determine the damping measures $\vartheta$ for the wheels of the respective axle or the damping of the axle, and
    wherein the lifting, pitching and rolling movements of the body mass are taken into account.

6.  A vibration damper test system (2) for a motor vehicle (4), comprising:

    at least one measuring head (10, 12) for optical detection of the positions of a wheel and a body shell of the motor vehicle (4) at a plurality of detection instants;
    an excitation device for inducing a vertical vibration of the motor vehicle, in particular a threshold (8) for driving over by the motor vehicle (4); and
    a data processing unit configured to receive measuring data from the measuring head (10, 12) and to implement a method according to any of the preceding claims.

**Revendications**

1.  Procédé d'essai d'un amortisseur de chocs intégré dans un véhicule automobile (4), consistant à
    définir des valeurs de départ de la constante d'amortissement kA, de la raideur du ressort cA pour une roue d'un véhicule automobile (4) et de la masse du véhicule automobile mA ;
    soumettre le véhicule automobile (4) à une oscillation verticale au moyen d'une excitation définie d'une roue sur l'essieu du véhicule automobile (4) ;
    saisir de manière optique les positions de la roue $sR_{réel}$ et de la carrosserie du véhicule automobile (4) à plusieurs instants de saisie pendant l'oscillation ;
    définir l'amplitude d'oscillation théorique de la structure $sA_{modèle}$ par un modèle de simulation qui repose sur l'équation différentielle

$$mA \cdot \ddot{s} A_{Modell} + kA \cdot \left( \dot{s} A_{Modell} - \dot{s} R_{real} \right) + cA \cdot \left( sA_{Modell} - sR_{real} \right) = 0$$

où la position de l'une roue $sR_{réel}$, la masse du véhicule automobile $mA$ pour la roue en question du véhicule automobile (4), la constante d'amortissement $kA$ et la raideur du ressort $cA$ sont utilisés comme paramètres ; réduire à un minimum la fonction d'erreur formée aux instants de saisie, résultant des écarts entre l'amplitude d'oscillation théorique de la structure $sA_{modèle}$ et l'amplitude d'oscillation de la structure observée $sA_{réel}$

$$\Delta = \sum_{i=1}^{n} \left( sA_{real,i} - sA_{Modell,i} \right)^2$$

et déterminer à partir de là les constantes d'amortissement $kA$, la raideur du ressort $cA$ et la masse de structure $mA$ ; et déterminer le degré d'amortissement

$$\vartheta = \frac{kA}{2\sqrt{cA \cdot mA}}$$

de l'amortisseur de chocs.

2. Procédé selon la revendication 1, dans lequel les étapes du procédé sont répétées en prenant les valeurs déterminées de constante d'amortissement $kA$, de raideur du ressort $cA$ et de masse de structure $mA$ comme valeurs de départ.

3. Procédé selon l'une quelconque des revendications précédentes, dans lequel la soumission du véhicule automobile (4) à une oscillation verticale au moyen d'une excitation définie s'effectue en roulant sur un seuil.

4. Procédé selon l'une quelconque des revendications précédentes, dans lequel la soumission du véhicule automobile (4) à une oscillation verticale au moyen d'une excitation définie $sR_{réel}$ s'effectue avec une fréquence d'excitation qui se situe entre 1 Hz et 3 Hz et en particulier dans la plage de la fréquence propre de la structure $f_0 = \frac{1}{2\pi} \sqrt{\frac{cA}{mA}}$

5. Procédé d'essai des amortisseurs de chocs d'au moins un essieu intégré dans un véhicule automobile (4),
dans lequel le procédé d'essai d'un amortisseur de chocs intégré dans un véhicule automobile (4) selon l'une quelconque des revendications précédentes est effectué pour les roues de l'essieu concerné, afin de déterminer les taux d'amortissement .9 pour les roues de l'essieu concerné ou l'amortissement de l'essieu, et
dans lequel les mouvements de levage, de tangage et de roulis de la masse de structure sont pris en compte.

6. Système d'essai d'amortisseur de chocs (2) d'un véhicule automobile (4), englobant
au moins une tête de mesure (10, 12) pour la saisie optique des positions d'une roue et de la carrosserie du véhicule automobile (4) à plusieurs instants de saisie ;
un dispositif d'excitation pour soumettre le véhicule automobile à une oscillation verticale, en particulier un seuil (8) sur lequel roulera le véhicule automobile (4) ; et
une unité de traitement des données qui est configurée de manière à recevoir des données de mesure de la tête de mesure (10, 12) et à effectuer un procédé selon l'une quelconque des revendications précédentes.

12

4

6

2

10

8

**Fig. 1**

mA

+ | sA

20

14

cA

kA

16

18

+ | sR

22

**Fig. 2**

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6161419 A
- EP 0611960 B1
- DE 4305048 A1

**In der Beschreibung aufgeführte Nicht-Patentliteratur**

- Wallentowitz, Henning: Vertikal-/Querdynamik von Kraftfahrzeugen. Institut für Kraftfahrwesen, 2005